# EUROPEAN PATENT SPECIFICATION

(11) **EP 2 958 359 B1**
(45) Date of publication and mention of the grant of the patent: **06.11.2019**
(21) Application number: 13788100.9
(22) Date of filing: 24.07.2013
(51) Int. Cl.: H04W 8/00, H04W 8/24, H04W 12/06, H04W 76/14, H04W 72/04, H04W 4/90

(54) **INTER-TERMINAL DEVICE-TO-DEVICE COMMUNICATION METHOD AND SYSTEM**
VERFAHREN UND SYSTEM ZUR VORRICHTUNG-ZU-VORRICHTUNG-KOMMUNIKATION ZWISCHEN ENDGERÄTEN
PROCÉDÉ ET SYSTÈME DE COMMUNICATION DE DISPOSITIF À DISPOSITIF ENTRE TERMINAUX

(30) Priority: 21.03.2013 CN 201310092285
(43) Date of publication of application: 23.12.2015
(73) Proprietor: ZTE Corporation, Shenzhen, Guangdong 518057 (CN)
(72) Inventor: GUO, Shengxiang, Shenzhen Guangdong 518057 (CN)
(74) Representative: Gevers Patents
(86) International application number: PCT/CN2013/080049
(87) International publication number: WO 2013/167078

(56) References cited:
- WO-A2-2012/091418
- WO-A2-2012/177002
- WO-A2-2013/025057
- CN-A- 102 843 162
- CN-A- 102 958 066
- CN-A- 102 984 699
- US-A1- 2013 064 138

## Description

### TECHNICAL FIELD

The present disclosure relates to the technical field of wireless communications, and in particular, to a method and a system for inter-terminal device-to-device communication.

### BACKGROUND

Along with continuous increase of the number of mobile terminals, especially, smart terminals, data traffic of a mobile internet renders rapidly increases. It is estimated that bandwidth requirements of wireless communications will reach a range of 1.2GHz to 1.7GHz in 2020. The distributed bandwidth resources have not met development requirements of wireless communications.

In order to break through constraint of the existing frequency spectrum resources, a technology of inter-terminal Device-to-Device (D2D) communication is proposed in sequent evolution of communication system, such as, LTE-Advanced.

Currently, there are two modes in the inter-terminal Device-to-Device communication. One is implemented by accessing a base station to schedule under the control of a mobile network and the other is implemented only by using communication function of terminals themselves without help of the existing mobile network. The existing mobile terminals have no capability of the above mentioned two types of D2D communication. They only have conventional function of cellular communication. Hence, it is necessary to study a method and a system for establishing D2D communication so as to implement the inter-terminal Device-to-Device communication. Document WO2012091418 describes a method of operating a terminal for direct D2D communication and UE relaying communication, in particular, a method of identifying whether or not the D2D communication is possible or confirming the closeness between the terminals available for allocating resources to be used for D2D communication.

### SUMMARY

The main objective of the present disclosure is to provide a method and a system for inter-terminal Device-to-Device communication which enables a terminal to be applied to not only D2D communication under the control of a cellular network, but also the field of public security. The scope of the invention is defined by the appended claims.

Compared with the prior art, the present disclosure has the following benefits:
the embodiments of the present disclosure may implement inter-terminal device-to-device communication, which are not only applicable to D2D communication under the control of a cellular network, but also can be applied in the field of public security.

### BRIEF DESCRIPTION OF THE DRAWINGS

Fig. 1 is a principle diagram illustrating a method of inter-terminal device-to-device communication according to an embodiment of the present disclosure;
Fig. 2 is a model diagram of a specific wireless terminal according to an embodiment of the present disclosure;
Fig. 3 is a schematic diagram of a D2D communication control module at a network side according to an embodiment of the present disclosure;
Fig. 4 is a schematic flow chart of establishing D2D communication under the control of a cellular network according to an embodiment of the present disclosure; and
Fig. 5 is a schematic flow chart of establishing D2D communication under the condition of no cellular network according to an embodiment of the present disclosure.

### DETAILED DESCRIPTION

The preferable embodiments of the present disclosure will be set forth in detail with reference to the accompanying drawings hereafter. It should be understood that the preferable embodiments described hereafter are only used for explaining and describing the present disclosure rather than for limiting the present disclosure.

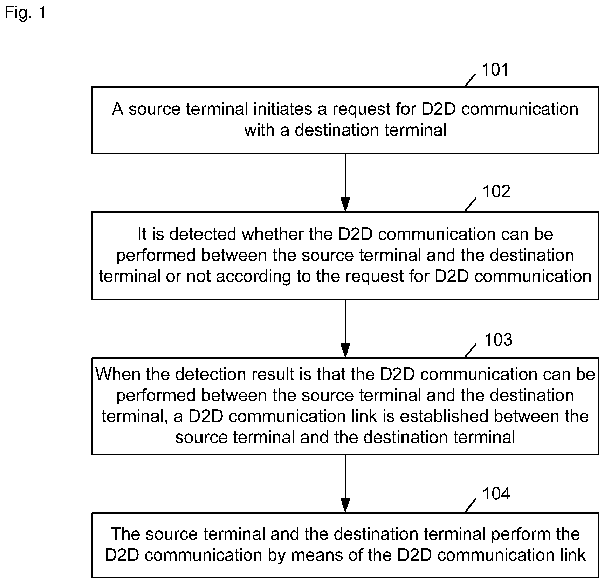

Fig. 1 is a principle diagram illustrating a method of inter-terminal device-to-device communication according to an embodiment of the present disclosure. As shown in Fig. 1, the method includes the following steps.

Step 101, a source terminal initiates a request for D2D communication with a destination terminal.

In Step 101, the source terminal may initiate the request for D2D communication to a network side so as to perform the D2D communication with the requested destination terminal.

Or, the source terminal may initiate the request for D2D communication over a dedicated channel of public safety so as to perform the D2D communication with destination terminal receiving the request for D2D communication.

Step 102, it is detected whether the D2D communication can be performed between the source terminal and the destination terminal or not according to the request for D2D communication.

In Step 102, the network side makes a pre-judgement on whether the D2D communication can be performed between the source terminal and the destination terminal or not after receiving the request for D2D communication. If a pre-judgement result is that the D2D communication can be performed, the network side sends notification messages for discovering each other to the source terminal and the destination terminal, respectively. The source terminal and the destination terminal send probing signals to each other, respectively, by using respective notification messages, and detect the probing signals sent by each other and send respective probe results to the network side. Based on the probe results from the source terminal and the destination terminal, the network side obtains the detection result about whether the D2D communication can be performed between the source terminal and the destination terminal or not.

To be specific, the pre-judgement includes: the network side determines whether the destination terminal supports the D2D communication or not and whether the destination terminal is located in a cell where the source terminal is located or in an adjacent cell; if the destination terminal supports the D2D communication and is located in the cell where the source terminal is located or in the adjacent cell, the pre-judgement result from the network side is that the D2D communication can be performed between the source terminal and the destination terminal; otherwise, the pre-judgement result from the network side is that the D2D communication cannot be performed between the source terminal and the destination terminal.

Or, the network side determines whether the destination terminal supports the D2D communication or not and whether a distance from the source terminal is shorter than a pre-set threshold or not; if the destination terminal supports the D2D communication and the distance from the source terminal is shorter than the pre-set threshold, the pre-judgement result from the network side is that the D2D communication can be performed between the source terminal and the destination terminal; otherwise, the pre-judgement result from the network side is that the D2D communication cannot be performed between the source terminal and the destination terminal.

To be specific, the notification messages received by the source terminal and the destination terminal include information about authentication between the source terminal and the destination terminal and information about time-frequency resources used by the probing signals, respectively.

Firstly, the source terminal and the destination terminal respectively generate the probing signals containing the information about authentication by using the received notification messages, and send the probing signals to each other using the time-frequency resources indicated by the information about time-frequency resources, respectively.

Next, the source terminal and the destination terminal respectively detect the probing signals sent from each other using the respective information about authentication, and analyse the detected probing signals from each other so as to obtain the probe results containing terminal probing information and channel quality information.

Finally, the network side determines whether the source terminal and the destination terminal can probe each other or not based on the terminal probing information from the source terminal and the destination terminal; if the network side determines that the source terminal and the destination terminal can probe each other, the network side determines whether the D2D communication can be performed between the source terminal and the destination terminal or not based on the channel quality information reported by the source terminal and the destination terminal; if the network side determines that the D2D communication can be performed between the source terminal and the destination terminal, the network side generates messages for informing the source terminal and the destination terminal to perform the D2D communication, and sends the messages to the source terminal and the destination terminal, respectively, wherein the messages include information indicating time-frequency resources used in the D2D communication and information of initial power of the respective terminals.

In Step 102, after sending the request for D2D communication, the source terminal sends a probing signal over the dedicated channel of public safety and detects a received probing signal. After receiving the request for D2D communication, the destination terminal sends a probing signal over the dedicated channel of public safety and detects a received probing signal. The source terminal and the destination terminal send respective probe results to each other over the dedicated channel of public safety. When the source terminal and the destination terminal determine that they can probe each other according to the probe results, the detection result that the D2D communication can be performed between the source terminal and the destination terminal is obtained. Otherwise, the detection result that the D2D communication cannot be performed between the source terminal and the destination terminal is obtained.

Step 103, if the detection result is that the D2D communication can be performed between the source terminal and the destination terminal, a D2D communication link is established between the source terminal and the destination terminal.

In Step 103, the source terminal and the destination terminal establish the D2D communication link using the time-frequency resources indicated by the information indicating time-frequency resources used in the D2D communication.

Step 104, the source terminal and the destination terminal perform the D2D communication by means of the D2D communication link.

In Step 104, the source terminal and the destination terminal perform the D2D communication via the D2D communication link according to the initial power of the respective terminals indicated by the information of initial power of the respective terminals.

According to an embodiment of the present disclosure, a system of inter-terminal device-to-device communication is provided, including:
a request initiating module, located in a source terminal and configured to initiate a request for D2D communication with a destination terminal;
a detection and determination module, located on a base station side and configured to detect whether D2D communication can be performed between the source terminal and the destination terminal or not according to the request for D2D communication, and send a detection result to link establishment modules;
the link establishment modules, located in the source terminal and the destination terminal and configured to establish a D2D communication link between the source terminal and the destination terminal when the detection result is that the D2D communication can be performed between the source terminal and the destination terminal;
D2D communication modules, located in the source terminal and the destination terminal and configured to perform the D2D communication using the D2D communication link.

The wireless access system in the embodiments of the present disclosure may be a LTE system, or may be a WCDMA system, a CDMA (2000) system, a TD-SCDMA system, a GSM system or any other wireless access systems. The terminal in the embodiments of the present disclosure is a wireless terminal for initiating a request for D2D communication, discovering other terminal devices and performing inter-terminal device-to-device communication. In addition, in communication of a conventional terminal with a cellular network, the terminal is further configured to communicate with the cellular network.

For better understanding, the embodiments of the present disclosure are further described by way of the LTE system.

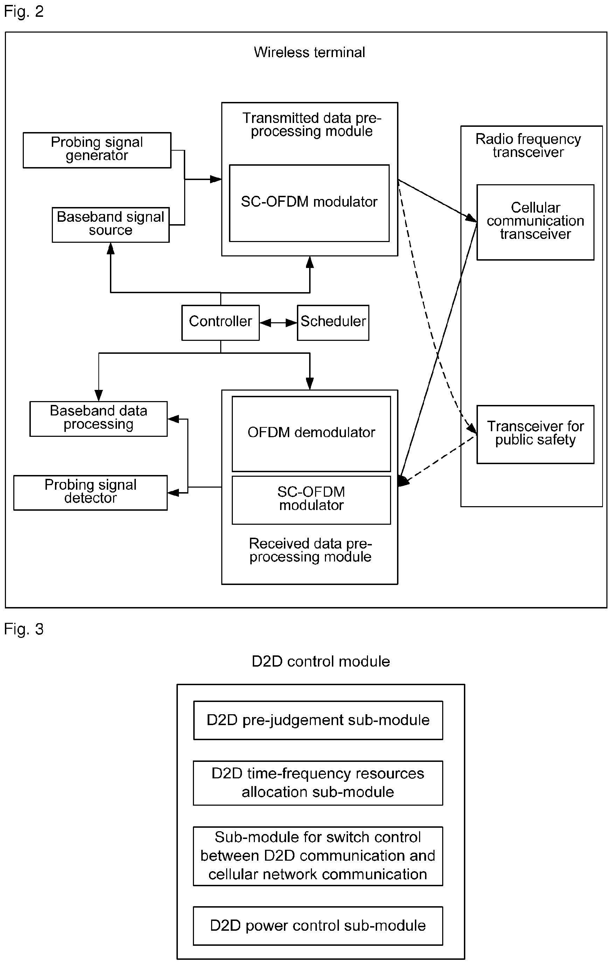

Fig. 2 is a model diagram of one wireless terminal according to an embodiment of the present disclosure. As shown in Fig. 2, the wireless terminal is a terminal in which new modules are introduced so as to adapt to D2D communication on a basis of a conventional LTE terminal. Therefore, the existing LTE terminal is sufficiently utilized to a maximized extent so as to save cost.

The new modules introduced in the wireless terminal include a probing signal generator and a probing signal detector.

The received data pre-processing module of the wireless terminal not only includes the Orthogonal Frequency Division Multiplexing (OFDM) demodulator of the conventional LTE terminal but also incorporates an SC-OFDM demodulator. The transmitted data pre-processing module may only include the SC-OFDM modulator of the conventional LTE terminal, or may incorporate an OFDM modulator. In this embodiment, there is no OFDM modulator in the transmitted data pre-processing module.

The radio frequency transceiver module of the wireless terminal not only includes the transceiver for cellular communication of the conventional terminal, but also is added with a transceiver for public safety. When the wireless terminal is in communication with the cellular network, the transceiver for cellular communication is selected. When the inter-terminal D2D communication is performed, the transceiver for cellular communication or the transceiver for public safety may be selected based on the required service.

The controller of the wireless terminal initiates a request for D2D communication with a destination terminal before inter-terminal device-to-device communication, establishes a D2D communication link and controls inter-terminal device-to-device communication. In addition, when there is no cellular network, the controller is also configured to determine whether the inter-terminal device-to-device communication is performed or not.

The probing signal generator is configured to generate a probing signal during the process of discovering other terminal devices. The probing signal includes terminal information about authentication and a channel reference signal and also includes data information.

During the process of discovering other terminal devices, the probing signal generator generates the probing signal based on information related to the probing signal and sent from the network side. The probing signal is transmitted by the radio frequency transceiver after being modulated by the Single Carrier Orthogonal Frequency Division Multiplexing (SC-OFDM) modulator of the transmitted data pre-processing module. The probing signal detector is configured to probe and analyse the probing signals generated by other wireless terminals. The probe result includes terminal probing information (i.e., whether to discover some wireless terminal), channel quality information and so on.

During the process of discovering other terminal devices, the wireless terminal receives the probing signals from other terminal devices, demodulates the received probing signals via the SC-OFDM demodulator of the received data pre-processing module, analyses the probing signals according to the information about authentication sent from the network side and generates the probe result.

In communication between the conventional terminal and the cellular network, in uplink, data from the terminal is subjected to SC-OFDM modulation in the transmitted data pre-processing module and is transmitted by the cellular communication transceiver. In downlink, the terminal receives a signal from a base station via the cellular communication transceiver and OFDM demodulation is performed on the signal by the received data pre-processing module. The probing signal generator, the probing signal detector and the transceiver for public safety are in a non-working state.

During the inter-terminal D2D communication, in transmission, data from the terminal is subjected to the SC-OFDM modulation in the transmitted data pre-processing module and is then transmitted by the cellular communication transceiver or the transceiver for public safety (depending on the required service). In reception, the terminal receives a signal from other terminal via the cellular communication transceiver or the transceiver for public safety, and SC-OFDM demodulation is performed on the received signal by the received data pre-processing module.

As can be seen from Fig. 2, in combination with the SC-OFDM modulator, the SC-OFDM demodulator, the cellular communication transceiver and the transceiver for public safety, the controller can implement the functions of the request initiating module, the link establishment module and the D2D communication module. In combination with the probing signal generator and the probing signal detector and the like, the controller can implement the function of the detection and determination module.

The communication network according to the embodiments of the present disclosure includes a base station and a D2D control module at the network side except for the wireless terminal. In device-to-device communication under the control of the cellular network, the base station and the D2D control module are configured to communicate with the wireless terminal, process the request for D2D communication from the wireless terminal, make pre-judgement on D2D communication, control the switch between the D2D communication and the cellular network and control parameters such as resources and power used in D2D communication. Thus, they implement the function of the detection and determination module. The objective of the D2D control module at the network side is to guarantee D2D communication of terminals under the control of the cellular network. As shown in Fig. 3, the D2D control module includes a D2D pre-judgement sub-module, a D2D time-frequency resources allocation sub-module, a sub-module for switch control between D2D communication and cellular network communication and a D2D power control sub-module.

The D2D pre-judgement sub-module is configured to (1) determine whether the terminal supports the D2D communication or not; (2) determine whether two wireless terminals are located in the same cell or adjacent cells and directly refuse the D2D communication if the determination result is that two wireless terminals are not located in the same cell or adjacent cells; (3) if the wireless terminals have GPS positioning information, determine the distance between the two terminals based on the positioning information of the two terminals so as to determine whether the terminals are close or not after comparing the distance with a pre-set threshold.

The D2D time-frequency resources allocation sub-module is configured to provide information about authentication for recognition between the wireless terminals, and information about time-frequency resources occupied by the probing signals.

The sub-module for switch control between D2D communication and cellular network communication is configured to determine whether to switch between D2D communication and cellular network communication based on information reported by the terminals. The information reported by the terminals may include channel quality information and also include information indicating whether the D2D communication will improve throughput in cells, information indicating whether the D2D communication ends and so on.

The D2D power control sub-module is configured to control transmit power of the D2D communication between the wireless terminals so as to avoid the interference to user in cells or base stations.

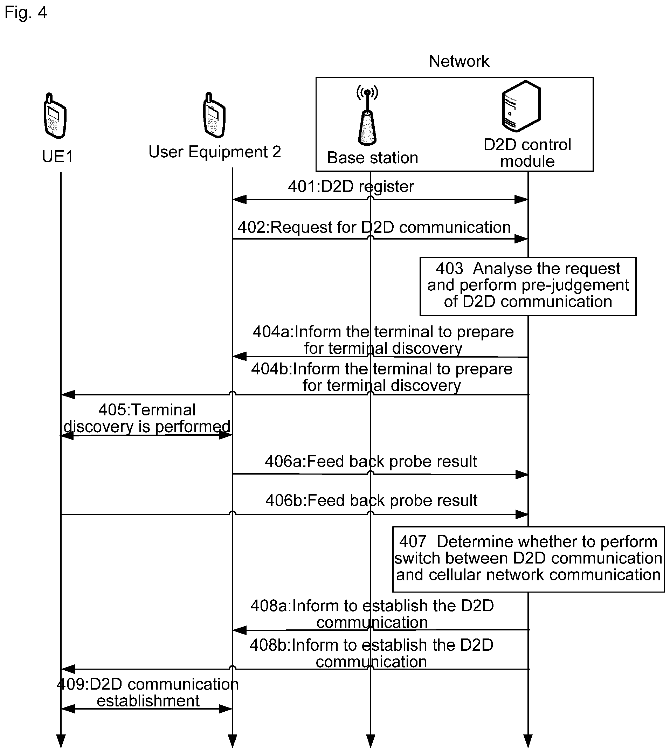

Fig. 4 is a schematic flow chart of establishing D2D communication under the control of a cellular network according to an embodiment of the present disclosure. Under the control of the cellular network, a terminal initiates a request for D2D communication to the network side. The network side makes a pre-judgement for the request. If a predetermined condition is met, the network side informs the relevant terminal to prepare the process of discovering other terminals. The terminal performs the process of discovering other terminals and feeds back the probe results to the network side. The network side determines whether to establish inter-terminal D2D communication. As shown in Fig. 4, the specific steps include:
Step 401, the source terminal UE2 performs D2D register in the network before initiating a request for D2D communication, wherein the registered information includes information about authentication, address information, service in use and so on.
Step 402, UE2 sends the request for D2D communication to the cellular network, wherein the request includes information relating to a destination terminal UE1.
Step 403, the D2D control module at the network side makes a pre-judgement on whether the D2D communication can be performed between UE1 and UE2, and feeds back a message of refusing the D2D communication to UE2 and ends if a D2D pre-judgement condition is not met. Step 404 is executed if the D2D pre-judgement condition is met.

The D2D pre-judgement condition includes whether UE1 supports the D2D communication, whether UE1 is located in a cell where UE2 is located or an adjacent cell, or whether UE1 has a distance from UE2 shorter than a pre-set threshold. When UE1 supporting the D2D communication is located in a cell where UE2 is located or an adjacent cell or when the distance between UE1 and UE2 is shorter than a pre-set threshold, the D2D pre-judgement condition is met.

The network side may detect users in service directly and periodically and makes a pre-judgement on whether the D2D communication can be performed between any two terminals. As such, step 402 is not needed to execute.

Step 404, the network side informs the terminals UE2 and UE1 to prepare for terminal discovery via notification messages. The notification messages include information about authentication between the terminals and information about time-frequency resources available for probing signals.

Step 405, the terminals UE2 and UE1 perform terminal discovery, including a process of transmitting a probing signal and a process of receiving and analyzing the probing signal by UE1 and UE2, respectively.

Terminal discovery includes the process of transmitting a probing signal and the process of receiving and analyzing the probing signal. The probing signal may include information about authentication between terminals, a channel reference signal, or also include data information and so on.

Step 406, the terminals UE2 and UE1 feed probe results back to the D2D control module of the network side, respectively. The probe results may include channel quality information, minimum required power and so on.

Step 407, the D2D control module determines whether to perform switch between D2D communication and cellular network communication based on the feedback probe results, and feeds back a message of refusing the D2D communication to UE2 and ends if a switch condition is not met. Step 408 is executed if the switch condition is met.

The switch condition may include channel quality information and also include information indicating whether the D2D communication will improve throughput in cells, information indicating whether the D2D communication ends and so on. If the channel quality is poor, the throughput in cells decreases or the D2D communication ends, switching to the cellular network communication is performed.

Step 408, the D2D control module respectively sends, to UE2 and UE1, messages configured to inform UE2 and UE1 to establish the D2D communication and control power of UE2 and UE1. The messages include information indicating time-frequency resources used in the D2D communication and information of initial power of the respective terminals.

Step 409, a D2D communication link is established between UE1 and UE2 and the D2D communication is performed via the D2D communication link.

The inter-terminal device-to-device communication may improve use of frequency spectrum via resources shared with users in a cell, relieve burden of the cellular network, reduce power consumption of batteries of mobile terminals, increase bit rates and enhance robust performance of the network infrastructure. In addition, the inter-terminal device-to-device communication also supports a new point-to-point data service in a small range.

Furthermore, compared with the conventional cellular communication mode, there is no need of the core network during the inter-terminal device-to-device communication. Therefore, the burden of communication with a base station is relieved and the occupied communication resources are saved. The research and implementation of the inter-terminal device-to-device communication means a lot for the development of communications technology.

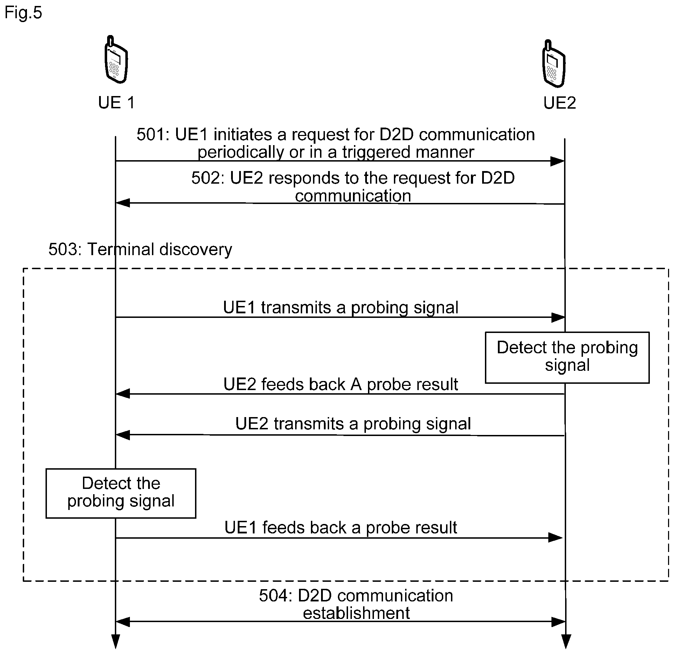

Fig. 5 is a schematic flow chart of establishing D2D communication under the condition of no cellular network according to an embodiment of the present disclosure. Under the condition of no cellular network, when a terminal periodically initiates a request for D2D communication or a user triggers a request for D2D communication, the terminal performs the process of discovering other terminals and receives probe results fed back for determination of whether D2D communication can be established. This D2D communication manner is especially suitable for the field of public safety. For example, when natural disasters such as earthquake or tsunami happen, even if there is no coverage of wireless base stations, the users may establish the D2D communication for contact. As shown in Fig. 5, by way of two terminals UE1 and UE2 establishing D2D communication, the steps include:
Step 501, the terminal UE1 initiates a request for D2D communication periodically or in a manual- triggered manner.
Step 502, the terminal UE2 receives and responds to the request for D2D communication.
Step 503, UE1 and UE2 perform the process of discovering other terminals.
   UE1 transmits a probing signal and UE2 detects the probing signal. UE2 transmits a probing signal and UE1 detects the probing signal. UE1 and UE2 feed probe results back to each other. Herein, the frequency used by the probing signals comes from resources in a dedicated channel of public safety.
Step 504, communication is performed via the dedicated channel of public safety or a designated channel so as to establish the inter-terminal device-to-device communication.

As can be seen from this embodiment, the inter-terminal device-to-device communication is for the field of public safety. When huge natural disasters happen, such as earthquake or torrent and so on, the existing network deployment may be destroyed and communication network signals may disappear, which causes mobile terminals unavailable and thus brings difficulty into relief. However, the technology of inter-terminal device-to-device communication can solve this problem since it implements device-to-device communication between terminals under the condition of no communication network signals. Thus, great convenience for relief is provided.

According to an embodiment of the present disclosure, after the terminal UE2 initiates the request for D2D communication, the terminal may first determine whether the signal quality from the base station of the cellular network can support communication. If the communication can be supported, the process of establishing D2D communication under the control of the cellular network is selected. Otherwise, the process of establishing D2D communication under the condition of no cellular network is selected. If the terminal supports manual control for whether to need the cellular network, the determination of the signal quality from the base station may not be performed. Instead, the manual selection is directly performed.

Although the present disclosure is described above in detail, the present disclosure is not limited to the above. Those skilled in the art may make various modifications according to the principle of the present disclosure. Therefore, modifications made according to the principle of the present disclosure shall fall within the scope of protection of the present disclosure.

## Claims

1. A method of inter-terminal Device-to-Device communication, comprising:
initiating, by a source terminal, a request for Device-to-Device, D2D, communication with a destination terminal;
detecting whether the D2D communication can be performed between the source terminal and the destination terminal or not according to the request for D2D communication;
establishing a D2D communication link between the source terminal and the destination terminal when a detection result is that the D2D communication can be performed between the source terminal and the destination terminal; and
performing the D2D communication by the source terminal and the destination terminal by means of the D2D communication link,
**characterized in that** the step of detecting whether the D2D communication can be performed between the source terminal and the destination terminal or not according to the request for D2D communication comprises:
making, by the network side, a pre-judgement on whether the D2D communication can be performed between the source terminal and the destination terminal or not after receiving the request for D2D communication;
when a pre-judgement result from the network side is that the D2D communication can be performed between the source terminal and the destination terminal, sending, by the network side, notification messages for discovering each other to the source terminal and the destination terminal, respectively;
sending, by the source terminal and the destination terminal, probing signals to each other using the notification messages, respectively, and detecting the probing signals sent by each other and sending probe results to the network side; and
based on the probe results from the source terminal and the destination terminal, obtaining, by the network side, the detection result about whether the D2D communication can be performed between the source terminal and the destination terminal or not.

2. The method of claim 1, wherein initiating, by the source terminal, the request for Device-to-Device, D2D, communication with the second terminal comprises:
initiating, by the source terminal, the request for D2D communication to a network side so as to perform the D2D communication with the destination terminal requested by the source terminal.

3. The method of claim 1, wherein making the pre-judgement on whether the D2D communication can be performed between the source terminal and the destination terminal or not comprises:
determining, by the network side, whether the destination terminal supports the D2D communication or not and whether the destination terminal is located in a cell where the source terminal is located or in an adjacent cell;
when the destination terminal supports the D2D communication and is located in the cell where the source terminal is located or in the adjacent cell, the pre-judgement result from the network side is that the D2D communication can be performed between the source terminal and the destination terminal; otherwise, the pre-judgement result from the network side is that the D2D communication cannot be performed between the source terminal and the destination terminal.

4. The method of claim 1, wherein making the pre-judgement on whether the D2D communication can be performed between the source terminal and the destination terminal or not comprises:
determining, by the network side, whether the destination terminal supports the D2D communication or not and whether a distance from the source terminal to the destination terminal is shorter than a pre-set threshold or not;
when the destination terminal supports the D2D communication and the distance from the source terminal to the destination terminal is shorter than the pre-set threshold, the pre-judgement result from the network side is that the D2D communication can be performed between the source terminal and the destination terminal; otherwise, the pre-judgement result from the network side is that the D2D communication cannot be performed between the source terminal and the destination terminal.

5. The method of claim 3 or 4, wherein
the notification messages include information about authentication between the source terminal and the destination terminal and information about time-frequency resources used by the probing signals;
sending, by the source terminal and the destination terminal, the probing signals to each other using the notification messages, respectively, and detecting the probing signals sent by each other comprise:
generating, by the source terminal and the destination terminal, the probing signals containing the information about authentication by using the notification messages, respectively;
sending, by the source terminal and the destination terminal, the probing signals to each other using the time-frequency resources indicated by the information about time-frequency resources, respectively;
detecting, by the source terminal and the destination terminal, the probing signals sent from each other using the information about authentication, respectively; and
analysing, by the source terminal and the destination terminal, the detected probing signals from each other so as to obtain the probe results containing terminal probing information and channel quality information.

6. The method of claim 5, wherein based on the probe results from the source terminal and the destination terminal, obtaining, by the network side, the detection result about whether the D2D communication can be performed between the source terminal and the destination terminal or not comprises:
determining, by the network side, whether the source terminal and the destination terminal can probe each other or not based on the terminal probing information from the source terminal and the destination terminal;
when the network side determines that the source terminal and the destination terminal can probe each other, determining, by the network side, whether the D2D communication can be performed between the source terminal and the destination terminal or not based on the channel quality information reported by the source terminal and the destination terminal; and
when the network side determines that the D2D communication can be performed between the source terminal and the destination terminal, generating, by the network side, messages for respectively informing the source terminal and the destination terminal to perform the D2D communication, and sending the messages to the source terminal and the destination terminal, respectively, wherein the messages include information indicating time-frequency resources used in the D2D communication and information of initial power of the respective terminals.

7. The method of claim 1, wherein initiating, by the source terminal, the request for D2D communication with the destination terminal comprises:
initiating, by the source terminal, the request for D2D communication via a dedicated channel of public safety so as to perform the D2D communication with the destination terminal receiving the request for D2D communication.

8. The method of claim 7, wherein detecting whether the D2D communication can be performed between the source terminal and the destination terminal or not according to the request for D2D communication comprises:
after sending the request for D2D communication, sending, by the source terminal, a probing signal over the dedicated channel of public safety and detecting a received probing signal;
after receiving the request for D2D communication, sending, by the destination terminal, a probing signal over the dedicated channel of public safety and detecting a received probing signal;
sending, by the source terminal and the destination terminal, probe results respectively to each other over the dedicated channel of public safety; and
when the source terminal and the destination terminal determine that the source terminal and the destination terminal can probe each other according to the probe results, obtaining the detection result that the D2D communication can be performed between the source terminal and the destination terminal; otherwise, obtaining the detection result that the D2D communication cannot be performed between the source terminal and the destination terminal.

9. A system of inter-terminal Device-to-Device communication, comprising:
a request initiating module, configured to initiate a request for Device-to-Device, D2D, communication with a destination terminal;
a detection and determination module, configured to detect whether the D2D communication can be performed between a source terminal and the destination terminal or not according to the request for D2D communication sent from the request initiating module, and send a detection result to a link establishment module;
the link establishment module configured to, when the detection result sent from the detection and determination module is that the D2D communication can be performed between the source terminal and the destination terminal, establish a D2D communication link with the destination terminal when the link establishment module is in the source terminal, or establish a D2D communication link with the source terminal when the link establishment module is in the destination terminal; and
a D2D communication module configured to perform the D2D communication using the D2D communication link,
**characterized in that** the detection and determination module is specifically configured to:
make a pre-judgement on whether the D2D communication can be performed between the source terminal and the destination terminal or not after the request for D2D communication is initiated;
when a pre-judgement result from the network side is that the D2D communication can be performed between the source terminal and the destination terminal, send notification messages for discovering each other to the source terminal and the destination terminal, respectively; and
obtain a detection result about whether the D2D communication can be performed between the source terminal and the destination terminal or not based on probe results from the source terminal and the destination terminal which send probing signals to each other using the notification messages, respectively, and which detect the probing signals sent by each other.

## Patentansprüche

1. Verfahren zur Vorrichtung-zu-Vorrichtung-Kommunikation zwischen Endgeräten, umfassend:
Einleiten, durch ein Quellenendgerät, einer Anfrage nach Vorrichtung-zu-Vorrichtung-, D2D-, Kommunikation mit einem Zielendgerät;
Detektieren, ob die D2D-Kommunikation zwischen dem Quellenendgerät und dem Zielendgerät gemäß der Anfrage nach D2D-Kommunikation durchgeführt werden kann oder nicht;
Einrichten einer D2D-Kommunikationsverbindung zwischen dem Quellenendgerät und dem Zielendgerät, wenn ein Detektionsergebnis ist, dass die D2D-Kommunikation zwischen dem Quellenendgerät und dem Zielendgerät durchgeführt werden kann; und
Durchführen der D2D-Kommunikation durch das Quellenendgerät und das Zielendgerät mit Hilfe der D2D-Kommunikationsverbindung;
**dadurch gekennzeichnet, dass** der Schritt zum Detektieren, ob die D2D-Kommunikation zwischen dem Quellenendgerät und dem Zielendgerät gemäß der Anfrage nach D2D-Kommunikation durchgeführt werden kann oder nicht, umfasst:
Erstellen, durch die Netzwerkseite, einer Vorbeurteilung, ob die D2D-Kommunikation zwischen dem Quellenendgerät und dem Zielendgerät nach Empfang der Anfrage nach D2D-Kommunikation durchgeführt werden kann oder nicht;
wenn ein Ergebnis einer Vorbeurteilung von der Netzwerkseite ist, dass die D2D-Kommunikation zwischen dem Quellenendgerät und dem Zielendgerät durchgeführt werden kann, Senden, durch die Netzwerkseite, von Benachrichtigungsnachrichten zur gegenseitigen Entdeckung an das Quellenendgerät bzw. das Zielendgerät;
Senden, durch das Quellenendgerät und das Zielendgerät, von Abtastsignalen aneinander jeweils unter Verwendung der Benachrichtigungsnachrichten und Detektieren der Abtastsignale, die voneinander gesendet wurden, und Senden von Abtastergebnissen an die Netzwerkseite; und
basierend auf den Abtastergebnissen von dem Quellenendgerät und dem Zielendgerät Erhalten, durch die Netzwerkseite, des Detektionsergebnisses in Hinblick darauf, ob die D2D-Kommunikation zwischen dem Quellenendgerät und dem Zielendgerät durchgeführt werden kann oder nicht.

2. Verfahren nach Anspruch 1, wobei Einleiten, durch das Quellenendgerät, der Anfrage nach Vorrichtung-zu-Vorrichtung-, D2D-, Kommunikation mit dem zweiten Endgerät umfasst:
Einleiten, durch das Quellenendgerät, der Anfrage nach D2D-Kommunikation an eine Netzwerkseite, um die D2D-Kommunikation mit dem Zielendgerät durchzuführen, die vom Quellenendgerät angefragt ist.

3. Verfahren nach Anspruch 1, wobei Erstellen der Vorbeurteilung, ob die D2D-Kommunikation zwischen dem Quellenendgerät und dem Zielendgerät durchgeführt werden kann oder nicht, umfasst:
Bestimmen, durch die Netzwerkseite, ob das Zielendgerät die D2D-Kommunikation unterstützt oder nicht und ob sich das Zielendgerät in einer Zelle, wo sich das Quellenendgerät befindet, oder in einer benachbarten Zelle befindet;
wenn das Zielendgerät die D2D-Kommunikation unterstützt und sich in der Zelle, wo sich das Quellenendgerät befindet, oder in der benachbarten Zelle befindet, ist das Ergebnis der Vorbeurteilung von der Netzwerkseite, dass die D2D-Kommunikation zwischen dem Quellenendgerät und dem Zielendgerät durchgeführt werden kann; andernfalls ist das Ergebnis der Vorbeurteilung von der Netzwerkseite, dass die D2D-Kommunikation zwischen dem Quellenendgerät und dem Zielendgerät nicht durchgeführt werden kann.

4. Verfahren nach Anspruch 1, wobei Erstellen der Vorbeurteilung, ob die D2D-Kommunikation zwischen dem Quellenendgerät und dem Zielendgerät durchgeführt werden kann oder nicht, umfasst:
Bestimmen, durch die Netzwerkseite, ob das Zielendgerät die D2D-Kommunikation unterstützt oder nicht und ob eine Distanz von dem Quellenendgerät zum Zielendgerät kürzer als ein voreingestellter Schwellenwert ist oder nicht;
wenn das Zielendgerät die D2D-Kommunikation unterstützt und die Distanz vom Quellenendgerät zum Zielendgerät kürzer ist als der voreingestellte Schwellenwert, ist das Ergebnis der Vorbeurteilung von der Netzwerkseite, dass die D2D-Kommunikation zwischen dem Quellenendgerät und dem Zielendgerät durchgeführt werden kann; andernfalls ist das Ergebnis der Vorbeurteilung, dass die D2D-Kommunikation zwischen dem Quellenendgerät und dem Zielendgerät nicht durchgeführt werden kann.

5. Verfahren nach Anspruch 3 oder 4, wobei
die Benachrichtigungsnachrichten Informationen über Authentifizierung zwischen dem Quellenendgerät und dem Zielendgerät und Informationen über Zeit-Frequenz-Ressourcen, die von den Abtastsignalen verwendet werden, beinhalten;
Senden, durch das Quellenendgerät und das Zielendgerät, der Abtastsignale aneinander jeweils unter Verwendung der Benachrichtigungsnachrichten und Detektieren der Abtastsignale, die voneinander gesendet wurden, umfassen:
Erzeugen, durch das Quellenendgerät und das Zielendgerät, der Abtastsignale, die die Informationen über Authentifizierung enthalten, unter Verwendung jeweils der Benachrichtigungsnachrichten;
Senden, durch das Quellenendgerät und das Zielendgerät, der Abtastsignale aneinander unter Verwendung der Zeit-Frequenz-Ressourcen, die jeweils durch die Informationen über die Zeit-Frequenz-Ressourcen angegeben sind;
Detektieren, durch das Quellenendgerät und das Zielendgerät, der Abtastsignale, die voneinander gesendet wurden, jeweils unter Verwendung der Informationen über Authentifizierung; und
Analysieren, durch das Quellenendgerät und das Zielendgerät, der detektierten Abtastsignale voneinander, um so die Abtastergebnisse zu erhalten, die Endgerätabtastinformationen und Kanalqualitätsinformationen enthalten.

6. Verfahren nach Anspruch 5, wobei, basierend auf den Abtastergebnissen von dem Quellenendgerät und dem Zielendgerät, Erhalten, durch die Netzwerkseite, des Detektionsergebnisses in Hinblick darauf, ob die D2D-Kommunikation zwischen dem Quellenendgerät und dem Zielendgerät durchgeführt werden kann oder nicht, umfasst:
Bestimmen, durch die Netzwerkseite, ob das Quellenendgerät und das Zielendgerät einander abtasten können oder nicht, basierend auf den Endgerätabtastinformationen von dem Quellenendgerät und dem Zielendgerät;
wenn die Netzwerkseite bestimmt, dass das Quellenendgerät und das Zielendgerät einander abtasten können, Bestimmen, durch die Netzwerkseite, ob die D2D-Kommunikation zwischen dem Quellenendgerät und dem Zielendgerät durchgeführt werden kann oder nicht, basierend auf den Kanalqualitätsinformationen, die von dem Quellenendgerät und dem Zielendgerät berichtet werden; und
wenn die Netzwerkseite bestimmt, dass die D2D-Kommunikation zwischen dem Quellenendgerät und dem Zielendgerät durchgeführt werden kann, Erzeugen, durch die Netzwerkseite, von Nachrichten zum Informieren des Quellenendgeräts bzw. des Zielendgeräts, die D2D-Kommunikation durchzuführen, und Senden der Nachrichten an das Quellenendgerät bzw. das Zielendgerät, wobei die Nachrichten Informationen, die Zeit-Frequenz-Ressourcen angeben, die in der D2D-Kommunikation verwendet werden, und Informationen über eine anfängliche Leistung der entsprechenden Endgeräte beinhalten.

7. Verfahren nach Anspruch 1, wobei Einleiten, durch das Quellenendgerät, der Anfrage nach D2D-Kommunikation mit dem Zielendgerät umfasst:
Einleiten, durch das Quellenendgerät, der Anfrage nach D2D-Kommunikation über einen dedizierten Kanal öffentlicher Sicherheit, um so die D2D-Kommunikation mit dem Zielendgerät durchzuführen, das die Anfrage nach D2D-Kommunikation empfängt.

8. Verfahren nach Anspruch 7, wobei Detektieren, ob die D2D-Kommunikation zwischen dem Quellenendgerät und dem Zielendgerät gemäß der Anfrage nach D2D-Kommunikation durchgeführt werden kann oder nicht, umfasst:
nach Senden der Anfrage nach D2D-Kommunikation Senden, durch das Quellenendgerät, eines Abtastsignals über den dedizierten Kanal öffentlicher Sicherheit und Detektieren eines empfangenen Abtastsignals;
nach Empfangen der Anfrage nach D2D-Kommunikation, Senden, durch das Zielendgerät, eines Abtastsignals über den dedizierten Kanal öffentlicher Sicherheit und Detektieren eines empfangenen Abtastsignals;
Senden, durch das Quellenendgerät und das Zielendgerät, von Abtastergebnissen jeweils aneinander über den dedizierten Kanal öffentlicher Sicherheit; und
wenn das Quellenendgerät und das Zielendgerät gemäß den Abtastergebnissen bestimmen, dass das Quellenendgerät und das Zielendgerät einander abtasten können, Erhalten des Detektionsergebnisses, dass die D2D-Kommunikation zwischen dem Quellenendgerät und dem Zielendgerät durchgeführt werden kann; andernfalls Erhalten des Detektionsergebnisses, dass die D2D-Kommunikation zwischen dem Quellenendgerät und dem Zielendgerät nicht durchgeführt werden kann.

9. System einer Vorrichtung-zu-Vorrichtung-Kommunikation zwischen Endgeräten, umfassend:
ein Anfrageeinleitungsmodul, das konfiguriert ist zum Einleiten einer Anfrage nach Vorrichtung-zu-Vorrichtung-, D2D-, Kommunikation mit einem Zielendgerät;
ein Detektions- und Bestimmungsmodul, das konfiguriert ist zum Detektieren, ob die D2D-Kommunikation zwischen einem Quellenendgerät und dem Zielendgerät, gemäß der Anfrage nach D2D-Kommunikation, die vom Anfrageeinleitungsmodul gesendet wird, durchgeführt werden kann oder nicht, und Senden eines Detektionsergebnisses zu einem Verbindungseinrichtungsmodul ;
wobei das Verbindungseinrichtungsmodul konfiguriert ist, wenn das Detektionsergebnis, das vom Detektions- und Bestimmungsmodul gesendet wird, ist, dass die D2D-Kommunikation zwischen dem Quellenendgerät und dem Zielendgerät durchgeführt werden kann, zum Einrichten einer D2D-Kommunikationsverbindung mit dem Zielendgerät, wenn das Verbindungseinrichtungsmodul im Quellenendgerät ist, oder Einrichten einer D2D-Kommunikationsverbindung mit dem Quellenendgerät, wenn das Verbindungseinrichtungsmodul im Zielendgerät ist; und
ein D2D-Kommunikationsmodul, das konfiguriert ist zum Durchführen der D2D-Kommunikation unter Verwendung der D2D-Kommunikationsverbindung;
**dadurch gekennzeichnet, dass** das Detektions- und Bestimmungsmodul im Speziellen konfiguriert ist zum:
Erstellen einer Vorbeurteilung, ob die D2D-Kommunikation zwischen dem Quellenendgerät und dem Zielendgerät durchgeführt werden kann oder nicht, nachdem die Anfrage nach D2D-Kommunikation eingeleitet wurde;
wenn ein Ergebnis der Vorbeurteilung von der Netzwerkseite ist, dass die D2D-Kommunikation zwischen dem Quellenendgerät und dem Zielendgerät durchgeführt werden kann, Senden von Benachrichtigungsnachrichten zur gegenseitigen Entdeckung an das Quellenendgerät bzw. das Zielendgerät; und
Erhalten eines Detektionsergebnisses in Hinblick darauf, ob die D2D-Kommunikation zwischen dem Quellenendgerät und dem Zielendgerät durchgeführt werden kann oder nicht, basierend auf Abtastergebnissen von dem Quellenendgerät und dem Zielendgerät, die jeweils unter Verwendung der Benachrichtigungsnachrichten Abtastsignale aneinander senden, und die die Abtastsignale, die voneinander gesendet wurden, detektieren.

## Revendications

1. Procédé de communication dispositif à dispositif entre terminaux, comprenant :
le lancement, par un terminal source, d'une demande de communication de dispositif à dispositif, D2D, avec un terminal de destination ;
la détection du fait que la communication D2D peut être réalisée entre le terminal source et le terminal de destination ou non en fonction de la demande de communication D2D ;
l'établissement d'une liaison de communication D2D entre le terminal source et le terminal de destination lorsqu'un résultat de détection est que la communication D2D peut être réalisée entre le terminal source et le terminal de destination ; et
la réalisation de la communication D2D par le terminal source et le terminal de destination au moyen de la liaison de communication D2D,
**caractérisé en ce que** l'étape consistant à détecter si la communication D2D peut être réalisée entre le terminal source et le terminal de destination ou non en fonction de la demande de communication D2D comprend :
le fait de faire, par le côté réseau, un pré-jugement du fait que la communication D2D peut être réalisée entre le terminal source et le terminal de destination ou non après réception de la demande de communication D2D ;
lorsqu'un résultat de pré-jugement provenant du côté réseau est que la communication D2D peut être réalisée entre le terminal source et le terminal de destination, l'envoi, par le côté réseau, de messages de notification destinés à se découvrir l'un l'autre au terminal source et au terminal de destination, respectivement ;
l'envoi, par le terminal source et le terminal de destination, de signaux de vérification l'un à l'autre au moyen des messages de notification, respectivement, et la détection des signaux de vérification envoyés l'un par l'autre et l'envoi des résultats de vérification au côté réseau ; et
sur la base des résultats de vérification provenant du terminal source et du terminal de destination, l'obtention, par le côté réseau, du résultat de détection concernant si la communication D2D peut être réalisée entre le terminal source et le terminal de destination ou non.

2. Procédé selon la revendication 1, dans lequel le lancement, par le terminal source, de la demande de communication D2D avec le terminal source comprend :
le lancement, par le terminal source, de la demande de communication D2D à un côté réseau de manière à réaliser la communication D2D avec le terminal de destination demandée par le terminal source.

3. Procédé selon la revendication 1, dans lequel le fait de faire un pré-jugement du fait que la communication D2D peut être réalisée entre le terminal source et le terminal de destination ou non comprend :
la détermination, par le côté réseau, du fait que le terminal de destination supporte la communication D2D ou non et du fait que le terminal de destination est situé dans une cellule dans laquelle le terminal source est situé ou dans une cellule adjacente ;
lorsque le terminal de destination supporte la communication D2D et est situé dans la cellule dans laquelle le terminal source est situé ou dans la cellule adjacente, le résultat de pré-jugement provenant du côté réseau est que la communication D2D peut être réalisée entre le terminal source et le terminal de destination ; sinon, le résultat de pré-jugement provenant du côté réseau est que la communication D2D ne peut être réalisée entre le terminal source et le terminal de destination.

4. Procédé selon la revendication 1, dans lequel le fait de faire un pré-jugement si la communication D2D peut être réalisée entre le terminal source et le terminal de destination ou non comprend :
la détermination, par le côté réseau, du fait que le terminal de destination supporte la communication D2D ou non et du fait qu'une distance du terminal source au terminal de destination est plus courte qu'un seuil prédéfini ou non ;
lorsque le terminal de destination supporte la communication D2D et que la distance du terminal source au terminal de destination est plus courte que le seuil prédéfini, le résultat de pré-jugement provenant du côté réseau est que la communication D2D peut être réalisée entre le terminal source et le terminal de destination ; sinon, le résultat de pré-jugement provenant du côté réseau est que la communication D2D ne peut être réalisée entre le terminal source et le terminal de destination.

5. Procédé selon la revendication 3 ou 4, dans lequel
les messages de notification incluent des informations concernant une authentification entre le terminal source et le terminal de destination et des informations concernant les ressources temps-fréquence utilisées par les signaux de vérification ;
l'envoi, par le terminal source et le terminal de destination, des signaux de vérification l'un à l'autre au moyen des messages de notification, respectivement, et la détection des signaux de vérification envoyés l'un par l'autre comprend :
la génération, par le terminal source et le terminal de destination, des signaux de vérification contenant des informations concernant une authentification au moyen des messages de notification, respectivement ;
l'envoi, par le terminal source et le terminal de destination, des signaux de vérification l'un à l'autre au moyen des ressources temps-fréquence indiquées par les informations concernant les ressources temps-fréquence, respectivement :
la détection, par le terminal source et le terminal de destination, des signaux de vérification envoyés l'un par l'autre au moyen des informations concernant l'authentification, respectivement ; et
l'analyse, par le terminal source et le terminal de destination, des signaux de vérification détectés l'un par l'autre de manière à obtenir les résultats de vérification contenant des informations de vérification de terminal et des informations de qualité de canal.

6. Procédé selon la revendication 5, dans lequel, sur la base des résultats de vérification provenant du terminal source et du terminal de destination, l'obtention, par le côté réseau, du résultat de détection concernant le fait que la communication D2D peut être réalisée entre le terminal source et le terminal de destination ou non comprend :
la détermination, par le côté réseau, du fait que le terminal source et le terminal de destination peuvent se vérifier l'un l'autre ou non sur la base des informations de vérification de terminal provenant du terminal source et du terminal de destination ;
lorsque le côté réseau détermine que le terminal source et le terminal de destination peuvent se vérifier l'un l'autre, le fait de déterminer, par le côté réseau, si la communication D2D peut être réalisée entre le terminal source et le terminal de destination ou non sur la base des informations de qualité de canal signalées par le terminal source et le terminal de destination ; et
lorsque le côté réseau détermine que la communication D2D peut être réalisée entre le terminal source et le terminal de destination, la génération, par le côté réseau, de messages destinés à informer respectivement le terminal source et le terminal de destination de réaliser la communication D2D, et l'envoi des messages au terminal source et au terminal de destination, respectivement, dans lequel les messages incluent des informations indiquant des ressources temps-fréquence utilisées dans la communication D2D et des informations de puissance initiale des terminaux respectifs.

7. Procédé selon la revendication 1, dans lequel le lancement, par le terminal source, de la demande de communication D2D avec le terminal de destination comprend :
le lancement, par le terminal source, de la demande de communication D2D par le biais d'un canal dédié de sécurité publique de manière à réaliser la communication D2D avec le terminal de destination recevant la demande de communication D2D.

8. Procédé selon la revendication 7, dans lequel la détection du fait que la communication D2D peut être réalisée entre le terminal source et le terminal de destination ou non en fonction de la demande de communication D2D comprend :
après l'envoi de la demande de communication D2D, l'envoi, par le terminal source, d'un signal de vérification sur le canal dédié de sécurité publique et la détection d'un signal de vérification reçu ;
après réception de la demande de communication D2D, l'envoi, par le terminal de destination, d'un signal de vérification sur le canal dédié de sécurité publique et la détection d'un signal de vérification reçu ;
l'envoi, par le terminal source et le terminal de destination, de résultats de vérification respectivement l'un à l'autre sur le canal dédié de sécurité publique ; et
lorsque le terminal source et le terminal de destination déterminent que le terminal source et le terminal de destination peuvent se vérifier l'un l'autre en fonction des résultats de vérification, l'obtention du résultat de détection que la communication D2D peut être réalisée entre le terminal source et le terminal de destination ; sinon, l'obtention du résultat de détection que la communication D2D ne peut être réalisée entre le terminal source et le terminal de destination.

9. Système de communication dispositif à dispositif entre terminaux, comprenant :
un module de lancement de demande, configuré pour lancer une demande de communication de dispositif à dispositif, D2D, avec un terminal de destination ;
un module de détection et de détermination, configuré pour détecter si la communication D2D peut être réalisée entre un terminal source et le terminal de destination ou non en fonction de la demande de communication D2D envoyée par le module de lancement de demande, et envoyer un résultat de détection à un module d'établissement de liaison ;
le module d'établissement de liaison configuré pour, lorsque le résultat de détection envoyé à partir du module de détection et de détermination est que la communication D2D peut être réalisée entre le terminal source et le terminal de destination, établir une liaison de communication D2D avec le terminal de destination lorsque le module d'établissement de liaison est dans le terminal source ou établir une liaison de communication D2D avec le terminal source lorsque le module d'établissement de liaison est dans le terminal de destination ; et
un module de communication D2D configuré pour réaliser la communication D2D au moyen de la liaison de communication D2D,
**caractérisé en ce que** le module de détection et de détermination est spécifiquement configuré pour :
faire un pré-jugement du fait que la communication D2D peut être réalisée entre le terminal source et le terminal de destination ou non après que la demande de communication D2D a été lancée ;
lorsqu'un résultat de pré-jugement provenant du côté réseau est que la communication D2D peut être réalisée entre le terminal source et le terminal de destination, envoyer des messages de notification destinés à se découvrir l'un l'autre au terminal source et au terminal de destination, respectivement ;
obtenir un résultat de détection concernant si la communication D2D peut être réalisée entre le terminal source et le terminal de destination ou non sur la base de résultats de vérification provenant du terminal source et du terminal de destination qui envoient des signaux de vérification l'un à l'autre au moyen des messages de notification, respectivement, et qui détectent les signaux de vérification envoyés l'un par l'autre.
